**Europäisches Patentamt**

**European Patent Office**

**Office européen des brevets**

(19)

(11) Numéro de publication: **0 001 531**

**B1**

(12) **FASCICULE DE BREVET EUROPEEN**

(45) Date de publication du fascicule du brevet: **06.01.82**

(21) Numéro de dépôt: **78400125.7**

(22) Date de dépôt: **03.10.78**

(51) Int. Cl.³: **E 06 B 5/16, C 03 C 27/06, B 32 B 17/10, E 06 B 3/66, C 09 J 5/02**

(54) Procédé de fabrication d'un vitrage pare-feu à gel aqueux.

(30) Priorité: **11.10.77 FR 7730505**

(43) Date de publication de la demande:
**18.04.79 Bulletin 79/8**

(45) Mention de la délivrance du brevet:
**06.01.82 Bulletin 82/1**

(84) Etats contractants désignés:
**BE DE GB LU NL**

(56) Documents cités:
FR - A - 2 072 563
FR - A - 2 263 203
FR - A - 2 325 677
FR - A - 2 330 658
FR - A - 2 346 548
US - A - 3 341 399
US - A - 3 900 606

(73) Titulaire: **SAINT-GOBAIN INDUSTRIES**
**62, Bd Victor Hugo**
**F-92209 Neuilly sur Seine (FR)**

(72) Inventeur: **Girard, Philippe**
**5, Saint-Thomas**
**F-27000 Evreux (FR)**
Inventeur: **Poisson, Bernard**
**56, Bd de Pesaro Appart. 15 127**
**F-92000 Nanterre (FR)**

(74) Mandataire: **Eudes, Marcel et al,**
**SAINT-GOBAIN RECHERCHE 39 Quai Lucien Lefranc**
**F-93304 Aubervilliers CEDEX (FR)**

Courier Press, Leamington Spa, England.

**0 001 531**

## Procédé de fabrication d'un vitrage pare-feu à gel aqueux

La présente invention concerne des vitrages multiples pare-feu, en particulier des doubles-vitrages, dont l'espace libre entre les feuilles de verre est rempli d'une composition aqueuse renfermant 65 à 95% d'eau en poids, mais gélifiée par addition d'un polymère organique.

De tels vitrages ne peuvent répondre d'une manière sûre à la condition "coupe-feu", par exemple aux conditions qui sont définies dans la norme allemande DIN 4102 que s'ils présentent des épaisseurs importantes; ceci reste vrai si, comme le propose la publication de brevet française FR 2.346.548 on introduit dans le gel aqueux, avant sa polymérisation, des sels minéraux susceptibles de produire, sous l'action du rayonnement thermique dû au feu, une mousse isolante, car une telle addition se paie d'un abaissement rapide de la qualité optique et spécialement de la transparence ou transmission lumineuse.

Dans ces conditions, et en particulier, si le vitrage multiple est monté dans une porte soumise à des battements, il apparaît parfois assez rapidement des bulles de plus ou moins grande surface qui migrent plus ou moins le long de la ou des surfaces internes des feuilles de verre. En cas d'incendie, on constate de façon analogue que le gel a tendance à s'effondrer par zones de plus ou moins grande surface, voire à s'effondrer complétement, tandis que le vitrage se déforme et plus encore, notamment pour des vitrages de grandes dimensions, si la feuille de verre exposée au feu casse et tombe: il ne joue plus que mal ou pas du tout son rôle de pare-feu dans le vitrage multiple.

La présente invention se propose de remédier à ces inconvénients et pour y parvenir propose la création d'une couche d'un agent d'adhérence entre les faces des feuilles de verre et le gel aqueux. De tels agents, en particulier les silanes organiques sont connus en soi et leur emploi a déjà été proposé dans la fabrication des vitrages feuilletés pour améliorer l'adhérence entre les feuilles externes et les feuilles intercalaires destinées à assembler ces dernières. On peut alors opérer par dépôt préalable comme par incorporation directe, que les feuilles intercalaires soient fabriquées à l'avance, notamment s'il s'agit de feuilles de PVB ou coulées in situ, s'il s'agit d'une résine époxy (US - A - 3.341.399). Une application particulière a été proposée pour la fabrication de vitrages ignifugés à feuilles intercalaire en PVC (FR - A - 2.330.658).

Dans le cas actuel des vitrages multiples pare-feu, cette simple mesure, qui n'a plus pour but l'assemblage du vitrage, suffit pour immobiliser le gel le rendant solidaire des feuilles du vitrage, que ce dernier soit monté fixe comme élément d'une cloison ou imposte, ou mobile dans les panneaux d'une porte destinée à être soumise à des battements répétés.

L'invention a donc pour objet un procédé de fabrication de vitrages multiples dit pare-feu ou coupe-feu, du type de ceux formés d'au moins deux feuilles rigides de verre ou produits vitrifiés, assemblées sur leur pourtour par un joint d'espacement et d'étanchéité, l'espace libre compris entre ces deux feuilles étant rempli d'une composition aqueuse renfermant 65 à 95% d'eau en poids et gélifiée par addition d'un polymère organique. Selon ce procédé, on crée entre le gel aqueux et les surfaces internes des feuilles de verre ou produit vitrifié, placées à son contact, une très mince couche d'un composé organique choisi dans le groupe constituée par les silanes susceptibles de réagir avec les doubles ou triples liaisons carbonées du polymère formant le gel, par les titanates organiques et par les zirconates organiques.

Cette couche permet à la masse de gel aqueux de rester adhérente aux feuilles de verre ou produit vitrifié du double vitrage, même lorsque celui-ci est soumis aux vibrations dues à des effets de battement par suite de l'ouverture et fermeture de la porte, le double vitrage continuant le cas échéant à posséder une bonne transmission optique grâce à l'absence de formation de bulles à l'interface gel/verre. Même si, lors d'un incendie, la feuille placée du côté du feu casse et s'effondre soit localement, soit sur une partie notable de sa surface, ledit gel continue à assurer son rôle de matériau pare-feu malgré la destruction partielle du vitrage.

Les silanes convenant à l'invention sont ceux comportant à la fois au moins un radical susceptible de réagir sur les radicaux —SiOH et —SiONa du verre, et au moins un autre radical susceptible de réagir avec les liaisons multiples carbonées que comporte le constituant organique du gel aqueux en sorte que le silane sert de pont d'accrochage, d'une part avec le verre grâce aux radicaux —SiOH et —SiONa du verre, et d'autre part avec la matière organique du gel grâce aux autres radicaux susceptibles de réagir avec les liaisons multiples carbonées de la matière organique de gel.

Dans une réalisation préférée, les silanes sont choisis dans la famille constituée par les silanes acryliques, les silanes vinyliques, les amino-silanes et les époxysilanes. De tels silanes donnent des valeurs d'adhérence sur le verre supérieures aux autres silanes. En effet, cette famille de silanes réagit particulièrement bien avec le composé organique des gels aqueux, en particulier quand ce commposé comporte des doubles liaisons carbonées et plus particulièrement des fonctions acryliques.

Les titanates et zirconates seront déposés à l'avance par tout moyen convenable sur les faces destinées à se trouver au contact du verre. Les silanes, pour leur part, peuvent être mélangés au gel préalablement à sa mise en place dans le vitrage; on évite d'avoir ainsi à effectuer deux opérations distinctes pour mettre en place l'agent d'adhérence, puis le gel. Mais les silanes peuvent être aussi déposés en couche mince sur les faces internes des feuilles de verre et ceci de préférence sous forme

2

d'un mélange avec une solution aqueuse d'un gel additionnel de la même famille que l'un des monomères contenus dans le gel de base, ledit mélange étant dilué dans un alcool inférieur ou de l'eau pure. De ce fait, surtout lorsque les gels sont très aqueux, c'est-à-dire que la matière organique est dissoute dans une grande quantité d'eau, on augmente le nombre de points d'accrochage entre le silane et le composé organique de gel additionnel, ce dernier se mélangeant au gel introduit par la suite entre les deux feuilles de verre. Les solvants alcool ou eau sont choisis car ils mouillent particulièrement bien le verre, ce qui assure un bon étalement du silane sur le verre. En outre, ces solvants sont tous deux de bons diluants des silanes et sont économiques.

Dans le cas où il est déposé à l'avance sur le verre de quelque façon que ce soit, la quantité de silane déposée doit correspondre à un poids de 1 à 5 g par m2 de verre. Une quantité excessive de silane par m2 de verre risque de conduire à des vitrages multiples dont la transmission lumineuse est affaiblie au-delà des normes admises. Une trop faible quantité de silane conduit à un accrochage insuffisant du gel sur les feuilles de verre.

On peut améliorer les qualités de la couche d'accrochage du gel aqueux sur les faces internes des feuilles de verre du vitrage multiple en disposant sur ces faces internes une mince couche d'un zirconate ou titanate organique préalablement à la mise en place de la mince couche de silane.

On comprendra mieux l'invention et ses différentes caractéristiques en se référant aux exemples de réalisation selon l'invention donnés ci-après à titre non limitatif.

Ces exemples peuvent être répartis en trois groupes: ceux relatifs à la seule propriété de l'adhérence du gel sur les feuilles de verre; ceux relatifs à la tenue du gel lorsque le double vitrage est soumis à des effets de battements d'une porte; ceux relatifs à la tenue au feu du double vitrage.

ADHERENCE:

Le premier groupe de ces exemples a pour but de mettre en évidence les qualités d'adhérence du gel sur les feuilles de verre et éventuellement les qualités optiques du double vitrage.

Les mesures quantitatives s'étant révélées hétérogènes et aléatoires, la mesure d'adhérence effectuée dans ces essais est uniquement qualitative. Elle s'effectue donc comme suit:

Une fois le double vitrage monté, rempli de gel et celui-ci polymérisé, on retire simultanément les deux feuilles de verre. Si le gel n'adhère pas ou peu sur le verre, il se sépare complètement d'une des feuilles et reste sur l'autre, mais on peut le décoller très facilement de cette dernière, par exemple avec l'ongle: l'adhérence du gel sur la feuille de verre est nulle.

Si le gel adhère sur le verre, il se coupe en deux suivant une ligne irrégulière. Une partie du gel reste collée sur la feuille A, l'autre sur l'autre feuille B.

On dit que l'adhérence est de x% lorsque sur x% de la surface de chacune des feuilles, la couche de gel se sépare en deux parties dans le sens de son épaisseur, chaque partie du gel restant collée dans cette zone sur l'une des surfaces A et B.

Par ailleurs, la qualité de la transmission optique des vitrages multiples comportant un gel interne dont l'adhérence sur les feuilles du vitrage a été renforcée conformément à l'invention se vérifie par l'observation visuelle d'un objet à travers le vitrage. S'il y a une légère perturbation optique de la vision de l'objet, le vitrage est dit présenter une altération ou perturbation optique de sa transmission sans que ce défaut puisse être mesuré de façon plus précise et chiffrable par les méthodes usuelles de mesure de transmission.

Le vitrage multiple est constitué par deux feuilles de verre espacées de 6 mm. Par tout moyen connu, l'espace entre les feuilles est rempli d'un gel dont l'épaisseur est par conséquent de 6 mm. Sauf dans les exemples 3 et 4, ces feuilles sont des feuilles de verre flotté poli au feu. Leur épaisseur n'influe pas sur l'adhérence du gel sur le verre; les feuilles sont donc choisies d'une épaisseur quelconque. Dans les cas ci-dessous elles sont de 6 mm d'épaisseur chacune.

## GELS CLASSIQUES

Le gel utilisé a la composition suivante:

| | |
|---|---|
| — ROCAGIL® 1295 de la Sté RHONE POULENC | 15 parties en poids |
| — Accélérateur de polymérisation (DEAPN) | 0,02„  „  „ |
| — Catalyseur de polymérisation: | |
| solution aqueuse à 5% de $Na_2S_2O_8$ | 7  „  „  „ |
| — Eau pure | 78  „  „  „ |

Le ROCAGIL 1295 utilisé dans ces essous est une solution aqueuse de résine acrylique comportant un agent réticulant.

Le D E A P N est le dyéthyl-amino-propyl nitrile.

## DEPOT DIRECT DE SILANE: EXEMPLE 1

Le silane utilisé pour enduire les feuilles de verre est un amino-silane vendu par la Sté DYNAMIT NOBEL sous l'appellation AMEO. Il est déposé sur les feuilles de verre au tampon à la main, par pulvérisation au pistolet, au trempé, par arrosage, etc . . . et il est répandu tel quel sur les faces des feuilles de verre destinées à être au contact de gel à raison de 1 à 5 g par m2 de feuilles de verre.

Après séchage de la mince couche de silane puis assemblage des feuilles de verre et mise en place à leur périphérie de leur cale d'espacement étanche, le gel est coulé entre les feuilles.

Après polymérisation du gel, le vitrage est soumis à l'essai d'adhérence. Les éprouvettes d'essai ont une surface de 20 cm x 25 cm.

Les mesures d'adhérence ont porté sur cinq essais et ont donné les pourcentages d'adhérence suivants:

| ESSAI N° 1 | 100% d'adhérence | |
|---|---|---|
| 2 | 100% | ,, |
| 3 | 40% | ,, |
| 4 | 100% | ,, |
| 5 | 100% | ,, |
| MOYENNE | 88% | |

Les éprouvettes d'essai présentent une légère perturbation optique à l'interface gel/verre.

Par comparaison, 5 éprouvettes témoins identiques aux précédentes, à ceci près que les faces internes des feuilles n'ont pas été enduites de silane, ont donné les résulats suivants:

| ESSAI N° 1 | 0% d'adhérence | |
|---|---|---|
| 2 | 0% | ,, |
| 3 | 0% | ,, |
| 4 | 0% | ,, |
| 5 | 0% | ,, |

Sur cinq éprouvettes témoins, le gel soumis à un effort de rupture se décolle de l'une ou l'autre des surfaces du verre en laissant celle-ci parfaitement propre et sèche, c'est-à-dire qu'en aucun point de la surface le gel ne collait vraiment au verre.

## EXEMPLE 2

L'exemple 2 est identique à l'exemple 1 hormis la nature du silane utilisé. Celui-ce est un époxy-silane: le A 187 de la Sté UNION CARBIDE.

Les mesures d'adhérence ont porté sur trois essais et donné les valeurs suivantes:

| ESSAI N° 1 | 100% d'adhérence | |
|---|---|---|
| 2 | 100% | ,, |
| 3 | 100% | ,, |

Les éprouvettes d'essai présentent un bon aspect optique.

Les deux exemples ci-après montrent que l'invention s'applique à des produits vitrifiés autres que ce type de verre:

## EXEMPLE 3

Les feuilles de produits vitrifiés utilisées dans cet exemple sont des feuilles de "verre-mère" céramisable, c'est-à-dire du verre susceptible d'être transformé en produit céramisé per traitement thermique, mais n'ayant pas encore subi ce traitement.

Les faces des feuilles de verre du double vitrage destinées à être au contact du gel aqueux ont été enduites préalablement du silane vendu sous la denomination A174 par la société UNION CARBIDE, c'est-à-dire un silane méthacrylique. Le gel aqueux introduit est le même que celui utilisé dans l'exemple 1.

Les résultats de la mesure d'adhérence ont montré une adhérence de 100%.

## EXEMPLE 4

Les feuilles de produits vitrifiés destinées à constituer le double vitrage et utilisées dans cet exemple sont des feuilles dont les faces internes ont été préalablement rendues réfléchissantes par pyrolyse d'un composé matallique en une mince couche d'oxyde.

Le silane déposé sur cette couche réfléchissante d'oxyde minéral est le même silane que dans l'exemple 3.

Les mesures d'adhérence ont indiqué une adhérence de 95% du gel sur les feuilles de verre.

## INCORPORATION DE SILANE AU GEL DE BASE — EXEMPLE 5

Dans le présent exemple, à nouveau relatif à des vitrages multiples constitués de feuilles de verre flotté, le silane est préincorporé au gel, dans la proportion de 1% en poids.

Les essais ont porté sur deux séries:

4

*1ère série*

La première série d'essais a été effectuée avec le silane A M E O de la Sté DYNAMIT NOBEL, c'est-à-dire un amino-silane.

Les résultats d'adhérence sont les suivants:

| ESSAI N° 1 | 75% d'adhérence |  |
|------------|-----------------|----|
| 2 | 85% | „ |
| 3 | 80% | „ |
| MOYENNE | 80% | „ |

Si l'adhérence est bonne, les éprouvettes ne sont que translucides. Le vitrage multiple ne conviendrait pas en tant que vitrage transparent mais conviendrait bien comme panneau coupe-feu.

*2ème série*

La deuxième série d'essais a été effectuée avec le silane A 174 de la Sté UNION CARBIDE, c'est-à-dire un silane méthacrylique".

| ESSAI N° 1 | 75% d'adhérence |  |
|------------|-----------------|----|
| 2 | 100% | „ |
| 3 | 80% | „ |
| MOYENNE | 83,33% | „ |

Les éprouvettes ont un léger trouble optique. Ce défaut peut être atténué en diminuant la dose de silane sans que cela diminue les qualités d'adhérence.

### INCORPORATION DANS UN GEL ADDITIONNEL: EXEMPLE 6

L'agent d'adhérence est déposé sur la face interne des feuilles de verre sous forme d'une solution de la composition suivante:

| Composé A 174 de la Sté Union Carbide | 5 parties en poids |  |
|---------------------------------------|--------------------|----|
| ROCAGIL 1295 de la Sté Rhône Poulenc | 10 | „ |
| Ethanol | 85 | „ |

La solution est déposée dans la proportion de 50 à 100 g de solution m2 de verre sur les faces des feuilles de verre destinées, après assemblage, à constituer les faces internes du double vitrage.

Les essais d'adhérence, en comparaison des essais témoins sans silane indiqués à l'exemple 1, font ressortir les résultats suivants:

| ESSAI N° 1 | 100% d'adhérence |  |
|------------|------------------|----|
| N° 2 | 100% | „ |
| N° 3 | 100% | „ |
| N° 4 | 100% | „ |
| N° 5 | 100% | „ |

Les doubles vitrages ne présentaient pas d'altération optique.

Les 4 exemples suivants font appel à des titanates ou des zirconates organiques.

Le gel reste le même que dans les exemples précédents.

### COUCHES DE TITANATES ET ZIRCONATES ORGANIQUES: EXEMPLE 7

Le titanate déposé sur les feuilles de verre est une solution à 5% en poids de butyl-titanate, $Ti(OC_4H_9)_4$ dans du white-spirit.

Deux essais d'adhérence ont été effectués, donnant les résultats suivants:

| ESSAI N° 1 | 100% d'adhérence | } Le vitrage présente un léger trouble. |
|------------|------------------|----|
| N° 2 | 100% d'adhérence | |

Dans les trois exemples suivants, les feuilles de verre sont d'abord recouvertes d'un titanate ou zirconate organique en solution dans un solvant organique. Après séchage, cette première couche est revêtue d'un silane dans de l'éthanol, incorporé dans un gel aqueux identique à celui introduit entre les deux feuilles de verre.

## COUCHES DOUBLES: EXEMPLE 8

Dans le présent exemple, on dépose une première couche d'alcool isopropylique contenant 2% en poids de titanate de butyle.

Après évaporation du solvant et séchage de cette couche on applique sur le titanate de butyle un mélange constitué par:

| | |
|---|---|
| Silane A 174 de Union Carbide | 5% en poids |
| Rocagil 1295 de Rhône Poulenc | 10%  „  „ |
| Ethanol | 85%  „  „ |

Les essais d'adhérence ont donné les résultats suivants:

| | | |
|---|---|---|
| ESSAI N° 1 | 100% | d'adhérence |
| 2 | 90% | „ |
| 3 | 95% | „ |
| MOYENNE | 95% | |

## EXEMPLE 9

Cet exemple comme le suivant recourt à une première couche de zirconate n-propylate à 2% en poids dans l'alcool isopropylique.

Après évaporation de l'alcool et séchage du zirconate, on applique une seconde couche au moyen d'un mélange constitué par:

| | |
|---|---|
| Silane A 174 de Union Carbide | 5% en poids |
| Rocagil 1295 de Rhône Poulenc | 10%  „  „ |
| Ethanol | 85%  „  „ |

Dans les mêmes conditions qu'à l'exemple 6 les essais d'adhérence ont donné:

| | | |
|---|---|---|
| ESSAI N° 1 | 100% | d'adhérence |
| 2 | 100% | „ |

## EXEMPLE 10

Cet exemple est semblable à l'exemple 9. La seule différence est que la seconde couche est réalisée au moyen d'un silane vinylique, le V T M O E O de DYNAMIT NOBEL dans un mélange constitué de:

| | |
|---|---|
| V T M O E O | 5% en poids |
| Rocagil | 10%  „  „ |
| Ethanol | 85%  „  „ |

Les essais d'adhérence ont donné:

| | | |
|---|---|---|
| ESSAI N° 1 | 100% | d'adhérence |
| 2 | 70% | „ |
| MOYENNE | 85% | |

## GELS AVEC INCORPORATION DE SELS

Les exemples suivants ont trait à des sels additionnés de sels divers.

On sait que les vitrages multiples pare-feu comportant un gel aqueux ont leur résistance au feu améliorée si on incorpore au gel certains sels susceptibles de former, sous l'effet de la chaleur du feu, soit une mousse, soit une couche de sel cristallisé blanc opaque résultant de la précipitation du sel du fait de la concentration du sel consécutive à l'évaporation de l'eau.

De tels sels en solution présentent parfois une basicité ou acidité non négligeable. Si ces solutions basiques ou acides sont compatibles avec les couches de titanates ou zirconates organiques, on pouvait craindre que de tels pH vinssent à perturber la consitution des couches de silanes et à diminuer d'autant leur pouvoir d'accrochage du gel aqueux sur le verre. Les exemples ci-après montrent qu'il n'en est rien. Les cinq premiers sont relatifs au phosphate de potassium.

## PHOSPHATE DE POTASSIUM: EXEMPLE 11

Dans le présent exemple, le silane déposé au pistolet sur les feuilles de verre est le A 174 de Union Carbide, dont 10 parties en poids sont mélangées dans 90 parties en poids d'éthanol.

Le gel aqueux introduit entre les deux feuilles de verre du double vitrage est le Rocagil 1295 de

0 001 531

Rhône Poulenc déjà cité, auquel a été additionné du phosphate de potassium, la composition du mélange étant:

| | |
|---|---|
| Rocagil 1295 de Rhône Poulenc | 15 parties en poids |
| Phosphate de potassium | 15 |
| DEAPN (accélérateur) | 0,05 |
| $Na_2S_2O_8$ à 5% dans l'eau (catalyseur) | 10 |
| Eau | 60 |

Les éprouvettes ont une surface de 20 cm x 25 cm soit 500 cm2.

Sur les éprouvettes témoins non traitées au silane, zirconates ou titanates organiques, l'adhérence du gel sur le verre est nulle:

| ESSAI N° 1 | 0% d'adhérence |
|---|---|
| 2 | 0% d'adhérence |
| 3 | 0% d'adhérence |
| 4 | 0% d'adhérence |
| 5 | 0% d'adhérence |

Trois doubles vitrages traités préalablement comme déjà décrit avec la solution alcoolique de silane ont donné:

| ESSAI N° 1 | 100% d'adhérence | |
|---|---|---|
| 2 | 100% d'adhérence | Les éprouvettes d'essai présentent un léger |
| 3 | 97% d'adhérence | trouble au niveau du contact gel aqueux/verre |
| MOYENNE | 99% d'adhérence | |

## EXEMPLE 12

Cet exemple ne diffère du précédent que par une teneur plus faible de la solution de silane. Il a été réalisé pour vérifier qu'une teneur plus faible en silane entraîne la disparition du léger trouble et que l'adhérence conserve néanmoins une valeur suffisante.

| Silane A 174 | 5 parties en poids |
|---|---|
| Ethanol | 95 parties en poids |

Les résultats ont donné:

| ESSAI N° 1 | 92% d'adhérence |
|---|---|
| 2 | 75% d'adhérence |
| 3 | 97% d'adhérence |
| MOYENNE | 88% d'adhérence |

Les doubles vitrages sont parfaitement transparents.

## EXAMPLE 13

Si l'on abaisse encore la teneur en silane dans l'éthanol, l'adhérence quoique conservant une valeur notable, est néanmoins nettement abaissée au risque de devenir insuffisante comme le montrent les résultats.

Cet exemple est identique à l'exemple 12, hormis la teneur en silane dans l'éthanol:

| Silane A 174 | 2,5 parties en poids | |
|---|---|---|
| Ethanol | 97,5 | |
| ESSAI N° 1 | 70% d'adhérence | |
| 2 | 35% d'adhérence | Les doubles vintages sont |
| 3 | 80% d'adhérence | parfaitement transparents |
| MOYENNE | 61,6% d'adhérence | |

## EXEMPLE 14

Cet exemple montre qu'en utilisant la même solution de silane que dans l'exemple 13, mais en y ajoutant une faible quantité du composé organique entrant dans le gel aqueux destiné à être introduit entre les feuilles du vitrage multiple, on maintient les qualités de transparence tout en augmentant les qualités d'adhérence du gel, qualités qui sont même améliorées par rapport à l'exemple 11 pour lequel la concentration de silane dans l'éthanol était de 10 parties en poids pour 90 parties en poids d'éthanol. Dans le présent exemple on a:

| | |
|---|---|
| Silane A 174 | 2,5 parties en poids |
| Rocagil 1295 | 10 |
| Ethanol | 87,5 |

Les essais ont donné:

| | | |
|---|---|---|
| ESSAI N° 1 | 100% d'adhérence | } Les double vitrages sont |
| 2 | 100% | } parfaitement transparents. |
| 3 | 100% | |

Les exemples 13 et 14 montrent que, si une solution de 2,5 parties en poids de silane dans 97,5 parties en poids d'éthanol conduit à une valeur d'adhérence insuffisante du gel, l'addition du composé organique de gel (10 parties en poids de Rocagil) à la solution de silane relevait les valeurs de l'adhérence à des niveaux excellents.

### EXEMPLE 15

Des essais comparatifs ont été faits entre un silane vinylique et un silane méthacrylique en solution dans l'éthanol et additionnés du composé organique du gel aqueux. Le gel introduit entre les feuilles de verre a toujours la même composition que celle indiquée dans l'exemple 11.

Les essais d'adhérence donnent des résultats tré bons et du même ordre de grandeur. Dans les deux cas, les doubles vitrages sont parfaitement transparents.

*Série 15A*

| | | |
|---|---|---|
| Silane A 174 | 5 parties en poids | |
| Rocagil 1295 | 10 | |
| Ethanol | 85 | |
| ESSAI N° 1. | 100% d'adhérence | } |
| 2' | 100% d'adhérence | } |
| 3 | 100% d'adhérence | } Très bonne transparence des |
| 4 | 100% d'adhérence | } doubles vitrages |
| 5 | 100% d'adhérence | } |

*Série 15 B*

| | | |
|---|---|---|
| Silane VTMOEO | 5 parties en poids | |
| Rocagil 1295 | 10 | |
| Ethanol | 85 | |
| ESSAI N° 1 | 82% d'adhérence | } |
| 2 | 100% d'adhérence | } |
| 3 | 100% d'adhérence | } Très bonne transparence |
| 4 | 90% d'adhérence | } |
| 5 | 97% d'adhérence | } |
| MOYENNE | 93,8% | |

Les exemples suivants sont semblables aux exemples 11 à 15. Le sel minéral introduit dans le gel aqueux est toutefois différent, le phosphate de potassium étant remplacé par un métaphosphate de sodium.

La composition du gel est la suivante:

| | |
|---|---|
| Rocagil 1295 | 15 parties en poids |
| Métaphosphate de sodium | 10 |
| D E A P N | 0,1 |
| NaOH à 10% | 2,5 |
| $(NH_4)_2S_2O_8$ à 5% dans l'èau | 5 |
| Eau Q.S. | 100 |

Ici encore les résultats montrent que la présence d'un tel sel est parfaitement compatible avec la formation d'une couche de silane recouvrant le verre pour améliorer l'adhérence du gel.

Les trois premiers exemples sont réalisés sans addition de Rocagil au silane, avec des concentrations décroissantes de silane.

**0 001 531**

## METAPHOSPHATE DE SODIUM: EXEMPLE 16

La solution de silane A 174 est à 10 parties en poids et 90 parties en poids d'éthanol.
Les résultats sont:

| ESSAI N° 1 | 100% d'adhérence | |
|---|---|---|
| 2 | 100% | } Léger trouble avec quelques points blanc |
| 3 | 100% | |

## EXEMPLE 17

Cet exemple est le même que l'exemple 16 mais la teneur en silane A 174 est abaissée à 5 parties en poids pour 95 parties d'éthanol.
Les résultats sont:

| ESSAI N° 1 | 92% d'adhérence | |
|---|---|---|
| 2 | 90% | } La transparence est très bonne |
| 3 | 90% | |

## EXEMPLE 18

Dans cet exemple, semblable aux deux autres, la teneur en silane A 174 est abaissée à 2,5 parties en poids pour 97,5 parties en poids d'éthanol.
Les résultats sont:

| ESSAI N° 1 | 60% d'adhérence | |
|---|---|---|
| 2 | 60% | } Très bonne transparence. |
| 3 | 55% | |

## EXEMPLE 19

Dans cet exemple, le gel est le même que les trois précédents; la solution de silane est la même que celle de l'exemple 15 A, soit:

Silane méthacrylique
A 174                     5 parties en poids
Rocagil 1295             10
Ethanol                  85
Les essais avec silane ont donné:

| ESSAI N° 1 | 100% d'adhérence | |
|---|---|---|
| 2 | 100% | } Bonne transparence |
| 3 | 100% | |

Dans les essais témoins sans silane, le gel n'a présenté aucune adhérence sur le verre.

## CHLORURE DE SODIUM: EXEMPLE 20

Cet exemple montre que les qualités d'adhérence apportées par le silane ne sont pas abaissées lorsque le gel aqueux contient du chlorure de sodium.
La composition du gel est:

Rocagil 1295            15 parties en poids
Chlorure de sodium      15
DEAPN                    0,05
$Na_2S_2O_8$ à 5% dans l'eau   5
Eau                     65

La solution de silane contient 5 parties en poids de silane méthacrylique A 174 et 95 parties d'éthanol.
Les essais témoins sans silane ont donné:

| ESSAI N° 1 | 0% d'adhérence |
|---|---|
| 2 | 0% |
| 3 | 0% |

Les essais témoins avec silane ont donné:

| ESSAI N° 1 | 100% d'adhérence |
|---|---|
| 2 | 100% |
| 3 | 100% |

9

## CHLORURE DE LITHIUM: EXEMPLE 21

Cet exemple est identique à l'exemple 20 à l'exception du chlorure de sodium introduit dans le gel aqueux qui a été remplacé par du chlorure de lithium.

Un seul essai d'adhérence du gel a été effectué.

Il a donné 100% d'adhérence. Le double vitrage présente une bonne transparence.

## SILICATE DE SOUDE: EXEMPLE 22

Dans le présent exemple, le gel renferme du silicate de soude, sel minéral moussant sous l'effet de la chaleur d'un incendie.

La composition du gel est:

| | |
|---|---|
| Rocagil 1295 | 25 parties en poids |
| D E A P N | 0,1 |
| $Na_2SiO_3$ à 30% dans l'eau | 10 |
| $Na_2S_2O_8$ à 5% dans l'eau | |
| Eau | 60 |

Sur des feuilles de verre flotté non revêtues d'un produit d'adhérence les essais ont donné:

| | |
|---|---|
| ESSAI N° 1 | 0% d'adhérence |
| 2 | 0% |
| 3 | 0% |

Sur des feuilles de verre enduites d'une couche de silane A 174 obtenue à partir d'une solution à 5% de silane dans l'éthanol les essais ont donné:

| | |
|---|---|
| ESSAI N° 1 | 100% d'adhérence |
| 2 | 100% |
| 3 | 100% |

Le deuxième groupe d'essais porte sur l'adhérence du gel sur les feuilles de verre d'un vitrage multiple soumis au vieillissement ou aux vibrations. Les vibrations sont essentiellement dues aux ouvertures et fermetures répétées de la porte, les vibrations se répercutant d'ailleurs sur l'imposte ou sur les dormants qui peuvent être eux-mêmes constitués par des vitrages multiples.

Les essais ont été réalisés avec deux feuilles de verre non trempé de 97 cm par 41 cm de longueur et largeur. L'épaisseur des feuilles est de 6 mm. L'écartement des feuilles, c'est-à-dire l'épaisseur du gel introduit ultérieurement entre les deux feuilles, est de 22 mm.

Le gel introduit est, pour tous ces essais, le Rocagil 1295 de RHONE POULENC. Le gel à 65 à 95% d'eau est additionné de sels minéraux choisis parmi l'un de ceux déjà cités dans les exemples précédents, ou d'autres sels. Le gel est également additionné d'un accélérateur, le DEAPN, et d'un catalyseur de polymérisation, un persulfate à 5% dans l'eau.

## VIEILLISSEMENT

De nombreux doubles vitrages ont été construits sans déposer de couches de zirconates, titanates ou silanes sur les faces internes des feuilles. Dans tous ces essais, on observe très vite, quelques jours après la fabrication du double vitrage empli de gel, l'apparition de bulles d'air de plus ou moins grande surface. Ces larges bulles se promènent doucement aux interfaces gel/verre et ont une tendance générale à se diriger vers le haut du double vitrage.

Ces bulles viennent soit d'un remplissage incomplet de l'espace compris entre les feuilles de verre (bulles coincées lors du remplissage en gel aux angles des profilés d'écartement des feuilles) soit de l'aspiration provoquée par le retrait du gel, retrait dû à une variation de température du double vitrage.

Ce défaut dû aux bulles a deux inconvénients d'importance:

a) défaut optique

b) défaut d'adhérence du gel lors du feu et du bris de la feuille de verre exposée au feu, défaut qui provoque un effondrement prématuré du gel surtout lorsque les dimensions du vitrage coupe-feu sont importantes.

## VIBRATIONS

### EXEMPLE 23

Cet exemple est réalisé avec un gel contenant du phosphate de potassium. La composition du gel introduit dans le double vitrage est celle indiquée dans l'exemple 11.

ESSAI N° 1: Les faces internes du double vitrage ne sont pas revêtues de titanate ou zirconate organique ou de silane.

Le vitrage est soumis à l'effet de battement assitôt après gélification et polymérisation du gel. Au remplissage, le double vitrage ne présente que très peu de bulles enfermées.

Après 400 battements, il apparait une séparation du gel d'avec les feuilles de verre. De nombreuses bulles ont apparu et se déplacent lentement. Les défauts optiques du vitrage sont importants.

ESSAI N° 2: les faces internes des feuilles de verre sont enduites d'une couche de silane A 174 (silane méthacrylique) de UNION CARBIDE en solution dans l'éthanol (5 parties en poids de A 174 et 90 parties en poids d'éthanol).

Le double vitrage résiste à 16 000 battements; puis apparaissent les mêmes défauts que dans l'essai n° 1. L'apparition de ces défauts est précédée d'un clivage du gel.

## EXEMPLE 24

Le gel introduit contient un métaphosphate de sodium. Sa composition est celle indiquée dans l'exemple 16.

ESSAI N° 1: dans cet essai les faces internes des feuilles de verre ne comportant pas de couche de zirconate ou titanate organique ou de silane.

Après trois jours de stockage, le double vitrage présente des décollements du gel à l'interface gel/feuilles de verre. Le vitrage ne peut pas même être monté pour subir le test de "battements".

ESSAI N° 2: les faces internes des feuilles de verre du double vitrage sont recouvertes d'une solution de silane A 174 (5%) dans l'éthanol (95%).

Après 200 000 battements (nombre au-delà duquel on considère inutile de poursuivre l'essai) le double vitrage ne présente ni bulle, ni clivage, ni décollement du gel à l'interface gel/feuilles de verre. Le vitrage est considéré comme correct optiquement et apte à l'épreuve du feu. On observe seulement quelques décollements au niveau de la liaison gel/profilé métallique.

ESSAI N° 3: cet essai, en tous points identique au précédent, donne des résultats identiques. On n'observe aucun défaut dans le vitrage après 200 000 battements.

## EXAMPLE 25

Dans cet exemple, le gel contient du chlorure de lithium. La composition est celle indiquée dans l'exemple 21 laquelle, le chlorure de lithium excepté, était la même que celle de l'exemple 20.

ESSAI N° 1: dans cet essai les faces des feuilles de verre au contact du gel ne sont recouvertes ni de titanate ou zirconate organique, ni de silane. Au bout de quelques jours de vieillissement après introduction du gel, des décollements de ce dernier apparaissent. Il n'y a pas de possibilité de faire des essais de battements.

ESSAI N° 2: les surfaces internes des feuilles de verre sont recouvertes d'une couche de silane A 174 de UNION CARBIDE en solution dans l'éthanol et contenant une fraction du polymère organique du gel. La composition du mélange déposé au pistolet est:

| | |
|---|---|
| Silane A 174 | 5 parties en poids |
| Rocagil 1295 | 10 |
| Ethanol | 85 |

A partir de 107.000 battements on observe quelques bulles le long des profilés métalliques et quelques cm2 de clivage (dans la masse du gel) le long du profilé vertical opposé aux charnières. Après 200 000 battements, les défauts ont très légèrement augmenté. Mais presque tous ces défauts sont cachés par le cadre qui maintient le vitrage dans la porte.

## RESISTANCE AU FEU

Les essais de résistance au feu ont été réalisés avec des doubles vitrages constitués par une feuille de verre DRAVEL de 7 mm d'épaisseur, c'est-à-dire non trempée mais armée d'un quadrillage de fil d'acier, feuille présentée du côté du feu et par une feuille de verre trempé de 6 mm d'épaisseur.

Le test de tenue au feu est effectué suivant la norme allemande DIN 4102. Si les faces internes des feuilles de verre ne sont pas recouvertes d'une couche d'accrochage de zirconate ou titanate organique ou de silane, après casse de la feuille de verre DRAVEL placée du côté du feu qui reste toutefois en place, toute la masse de gel flotte entre les deux feuilles. Sous l'effet de son propre poids, cette masse commence par se détacher du bord supérieur du cadre intercalaire du double vitrage et ce, d'autant plus rapidement que les dimensions du vitrage sont grandes; puis elle se détache de toute la surface de la feuille de verre non soumise à la chaleur du feu qui se trouve encore en place et s'effondre.

Au contraire, lorsque les faces internes des feuilles de verre sont enduites d'une telle couche, la feuille casse mais le gel ne s'effondre pas. Il y a alors une pellicule de gel qui reste adhérente sur la feuille de verre cassée tandis que toute la masse restante de gel adhère à la feuille de verre située du côté opposé au feu.

## INCORPORATION AU GEL DE BASE: EXEMPLE 26

Cet exemple comporte plusieurs essais dans lesquels les feuilles de verre ne reçoivent pas au préalable de couche de titanate ou zirconate organiques ou silanes.

ESSAI N° 1: Dans le premier essai, le double vitrage est rempli d'un gel de la composition suivante:

Rocagil 1295 de RHONE
POULENC  12,5 parties en poids
DEAPN  0,15
$Na_2S_2O_8$ à 5%  4
Eau Q.S.  100

Ses dimensions sont de 41 cm x 41 cm.

L'espacement des deux feuilles de verre, c'est-à-dire l'épaisseur de gel, est de 36 mm.

La durée de tenue au feu, suivant la norme allemande DIN 4102, du double vitrage disposé dans la porte d'un four est de 57 minutes.

ESSAI N° 2: Le 2ème essai concerne une série de doubles vitrages ne comprenant pas de couche de titanate ou zirconate organiques ou silanes, mais pour lesquels on a ajouté au gel Rocagil un sel minéral susceptible par évaporation de l'eau au feu soit de cristalliser en donnant un dépôt de sel blanc soit de donner une mousse formant un écran protecteur entre le feu et le reste du gel et de la feuille du double vitrage disposé du côté opposé au feu. Le deuxième essai se rapporte donc à différents doubles vitrages desquels l'épaisseur de gel et les teneurs en Rocagil ou en sel minéral introduit, varient d'un vitrage à l'autre. Les résultats sont résumés dans le tableau suivant:

| Composition du gel | Epaisseur du gel (en mm) | Temps "coupe-feu" selon la norme DIN 4102 (en minutes) |
|---|---|---|
| 15 parties en poids de Rocagil 1295<br>15 parties en poids silicate de soude à 30%<br>Eau Q.S. 100 | 24 | 45 |
| 15 parties en poids Rocagil<br>15 parties en poids silicate de soude à 30%<br>Eau Q.S. 100 | 36 | 58 |
| 25 parties en poids Rocagil<br>15 parties en poids Silicate à 30%<br>Eau Q.S. 100 | 24 | 54 |
| 25 parties en poids Rocagil<br>10 parties en poids Silicate à 30%<br>Eau Q.S. 100 | 24 | 45 |
| 15 parties en poids Rocagil<br>15 parties en poids Chlorure de lithium<br>Eau Q.S. 100 | 32 | 76 |
| 15 parties en poids Rocagil<br>15 parties en poids Chlorure de lithium<br>Eau Q.S. 100 | 22 | 45 |
| 15 parties en poids Rocagil<br>15 parties en poids Phosphate de Na<br>Eau Q.S. 100 | 22 | 39 |

### COUCHE DEPOSEE AU PREALABLE: EXEMPLE 27

Cet exemple montre l'augmentation considérable de la durée de résistance au feu, dit encore "temps coupe-feu" suivant norme DIN 4102 quand les faces internes des feuilles de verre du double vitrage sont préalablement revêtues d'une couche d'accrochage du gel sur le verre.

Dans cet exemple, les faces internes des feuilles de verre sont recouvertes d'une couche obtenue par pulvérisation au pistolet d'une solution de:

Silane méthacrylique A 174 de UNION CARBIDE  5 parties en poids
Gel de résine acrylamide: ROCAGIL 1295  10 parties en poids
Ethanol  85

La couche comporte 1 à 5 g de silane par m2 de verre ainsi que dans tous les exemples précédents comme il a déjà été dit dans l'exemple 1.

Dans cet exemple, les deux séries d'essais montrent tout à la fois, d'une part, la beaucoup plus

**0 001 531**

longue durée de résistance au feu d'un double vitrage de petites dimensions par rapport à celui de grandes dimensions, d'autre part l'augmentation de la durée de résistance au feu lorsque le double vitrage est rempli d'un gel qui adhère même au feu (dans ces essais grâce à une couche de silane méthacrylique) par rapport à celle d'un double vitrage dont le gel adhère peu au feu par suite de l'absence de couche de silane, ou titanate ou zirconate organique.

ESSAI N° 1: Double vitrage sans couche de silane.
Composition du gel:

| | |
|---|---|
| ROCAGIL 1295 | 15 parties en poids |
| Orthophosphate de Na | 15 parties en poids |
| DEAPN | 0,1 parties en poids |
| $(NH_4)_2S_2O_8$ à 5% dans l'eau | 5 |
| Eau Q.S. | 100 |

| | durée coupe-feu |
|---|---|
| Vitrage de 41 × 41 cm | 82 mn |
| Vitrage de 110 × 130 cm | 30 mn |

ESSAI N° 2: Double vitrage avec couche de silane méthracylique A 174
Composition du gel:

| | |
|---|---|
| ROCAGIL 1295 | 15 parties en poids |
| Polysulphate de K | 15 parties en poids |
| DEAPN | 0,05 |
| $Na_2S_2O_8$ à 5% dans l'eau | 10 |
| Eau Q.S. | 100 |

| | durée coupe-feu |
|---|---|
| Vitrage de 41 × 41 cm | 105 mn |
| Vitrage de 110 × 130 cm | 72 mn |

Les divers exemples ont montré l'amélioration des qualités d'adhérence d'un gel aqueux sur les feuilles de verre d'un vitrage multiple et par conséquent, les améliorations qui en découlent sur les effets de "battements" d'une porte et sur la qualité dite "coupe-feu", c'est-à-dire la durée de tenue du vitrage en cas d'incendie, durée mesurée par la norme allemande DIN 4102.

Il est bien évident que certaines caractéristiques de ces exemples peuvent subir des modifications tout en restant dans le cadre de l'invention.

C'est ainsi que la nature des sels introduits dans le gel et leur concentration, la nature du produit d'accrochage du gel et sa concentration, le mode d'application de ce produit soit par application sur des feuilles de verre avant l'introduction du gel entre les feuilles, soit par mélange au gel avant son introduction etc... peuvent faire l'objet de combinaisons diverses.

**Revendications**

1. Procédé de fabrication d'un vitrage pare-feu multiple constitué d'au moins deux feuilles rigides transparentes, assemblées sur leur pourtour par un joint d'espacement et d'étanchéité, l'espace libre compris entre ces deux feuilles étant rempli d'une composition aqueuse renfermant 65 à 95% d'eau en poids et gélifiée par addition d'un polymère organique, caractérisé en ce qu'on crée entre le gel aqueux et les surfaces internes des feuilles placées à son contact, une couche d'un composé organique du groupe constitué par les silanes susceptibles de réagir avec les doubles ou triples liaisons carbonées du polymère formant le gel, par les titanates organiques, et par les zirconates organiques.

2. Procédé selon la revendication 1, caractérisé en ce que le gel est un gel acrylique et que le silane est choisi dans la famille constituée par les silanes acryliques, les silanes vinyliques, les aminosilanes et les époxy-silanes.

3. Procédé selon la revendication 2, caractérisé en ce que le silane est déposé sur les faces internes des feuilles du vitrage sous forme d'un mélange avec une solution aqueuse d'un gel additionnel de la même famille qu'un monomère contenu dans le gel de base.

4. Procédé selon la revendication 3, caractérisé en ce que l'on dépose successivement sur les faces internes des feuilles du vitrage une première couche de zirconate ou de titanate organique, puis une seconde couche renfermant un silane.

**Patentansprüche**

1. Verfahren zur Herstellung einer feuerfesten Mehrfachverglasung, bestehend aus mindestens zwei starren transparenten Scheiben, die an ihrem Rand durch einen Abdichtungs-Abstandhalter

13

# 0001531

zusammengehalten werden, wobei der freie Raum zwischen den beiden Scheiben von einer wäßrigen Masse ausgefüllt ist, die 65 bis 95 Gew.-% Wasser enthält und in ein Gel überführt worden ist durch Zugabe eines organischen Polymeren, dadurch gekennzeichnet, daß zwischen dem wäßrigen Gel und den inneren Oberflächen der Scheiben eine damit in Kontakt stehende Schicht aus einer organischen Verbindung erzeugt wird, die ausgewählt wird aus der Gruppe der Silane, die mit den Kohlenstoff-Kohlenstoff-Doppelbindungen oder -Dreifachbindungen des das Gel bildenden Polymeren reagieren können, der organischen Titanate und der organischen Zirkonate.

2. Verfahren nach Anspruch 1, dadurch gekennzeichnet, daß es sich bei dem Gel um ein Acrylgel handelt und daß das Silan ausgewählt wird aus der Familie der Acrylsilane, der Vinylsilane, der Amino-silane und der Epoxysilane.

3. Verfahren nach Anspruch 2, dadurch gekennzeichnet, daß das Silan auf die inneren Oberflächen der Scheiben der Verglasung in Form eines Gemisches mit einer wäßrigen Lösung eines zusätzlichen Gels der gleichen Familie wie das in dem Grundgel enthaltene Monomere aufge-bracht wird.

4. Verfahren nach Anspruch 3, dadurch gekennzeichnet daß auf die inneren Oberflächen der Scheiben der Verglasung nacheinander eine erste Schicht aus einem organischen Zirkonat oder Titanat und dann eine ein Silan enthaltende zweite Schicht aufgebracht werden.

## Claims

1. Method of making a fire-resistant multiple pane formed of at least two transparent rigid sheets, assembled together at their periphery by a fluid tight joint forming a space between the sheets, the space being filled with an aqueous composition comprising 65 to 95% of water by weight and gelled by the addition of an organic polymer, characterised in that there is created between the aqueous gel and the internal surfaces of the sheets in contact therewith, a layer of an organic compound from the group formed by the silanes capable of reacting with double and triple carbon bonds of the polymer forming the gel, by organic titanates and by organic zirconates.

2. Method according to claim 1, characterised in that the gel is an acrylic gel and the silane is chosen from the family formed by the acrylic silanes, vinyl silanes, amino silanes and epoxy silanes.

3. Method according to claim 2, characterised in that the silane is deposited on the internal surfaces of the sheets of the pane in the form of a mixture with an aqueous solution of an additional gel of the same family as a monomer contained in the base gel.

4. Method according to claim 3, characterised in that there are deposited successively on the internal surfaces of the sheets of the pane a first layer of organic zirconate or titanate, and then a second layer containing a silane.